# FASCICULE DE BREVET EUROPEEN

(11) **EP 2 114 612 B1**
(45) Date de publication et mention de la délivrance du brevet: **10.08.2016**
(21) Numéro de dépôt: 08709071.8
(22) Date de dépôt: 18.02.2008
(51) Int. Cl.: B23K 23/00

(54) **DISPOSITIF D'ALLUMAGE D'UNE COMPOSITION ALUMINOTHERMIQUE, CREUSET L'INCORPORANT ET PROCEDES ASSOCIES**
VORRICHTUNG ZUM ZÜNDEN EINER ALUMINO-THERMISCHEN ZUSAMMENSETZUNG, DIESE ENTHALTENDER TIEGEL UND VERWANDTE VERFAHREN
DEVICE FOR IGNITING AN ALUMINO-THERMAL COMPOSITION, CRUCIBLE CONTAINING SAME AND RELATED METHODS

(30) Priorité: 06.03.2007 FR 0753668
(43) Date de publication de la demande: 11.11.2009
(73) Titulaire: Railtech International, 59590 Raismes (FR)
(72) Inventeur: VISEUR, Francis, F-59195 Herin (FR); THURU, Jean-Jacques, F-59230 Saint-Amand-Les-Eaux (FR); WINIAR, Lionel, F-59790 Ronchin (FR)
(74) Mandataire: Regimbeau
(86) Numéro de dépôt international: PCT/EP2008/051933
(87) Numéro de publication internationale: WO 2008/113653

(56) Documents cités:
- FR-A- 2 893 871
- US-A- 1 562 137
- US-A- 5 145 106

## Description

La présente invention concerne un procédé d'allumage d'une composition aluminothermique et un dispositif associé, et plus particulièrement un procédé et un dispositif du type dans lesquels on place à proximité immédiate de la composition une résistance électrique reliant deux électrodes et on alimente cette résistance en courant électrique pour provoquer un dégagement de chaleur par effet Joule à partir de celle-ci.

Un tel procédé et un tel dispositif sont bien connus en eux-mêmes, dans un mode de mise en oeuvre dans lequel la résistance électrique est revêtue d'une composition pyrotechnique d'allumage et, ainsi revêtue, baigne dans la composition aluminothermique à allumer. Cette composition pyrotechnique d'allumage est composée et dosée de telle sorte que, sous l'effet du dégagement de chaleur provoqué par effet Joule dans la résistance électrique lorsqu'elle est alimentée en courant électrique, elle provoque un dégagement de chaleur suffisant pour provoquer l'allumage de la charge aluminothermique, que le simple dégagement de chaleur par effet Joule n'aurait pas pu provoquer.

Ainsi, le brevet américain n° 1 562 137 décrit un tel procédé, appliqué à l'allumage d'une composition aluminothermique à usage de « mine thermique », destinée à briser la glace dans les alimentations, en eau, d'installations hydrauliques, mais d'autres applications ont été proposées, en particulier dans le domaine de la soudure aluminothermique des rails de chemin de fer.

Tel qu'il est ainsi mis en oeuvre de façon connue, ce procédé se révèle particulièrement dangereux dans la mesure où, dès lors qu'elle est entrée en réaction, fût-ce de façon accidentelle, la composition pyrotechnique auto-entretient la réaction sans que l'on puisse pratiquement l'arrêter et provoque ainsi intempestivement l'allumage de la composition aluminothermique et le dégagement particulièrement important de chaleur qui l'accompagne, faisant ainsi courir au personnel présent sur place et aux installations un danger particulièrement grand, quelle que soit l'application envisagée.

La Demanderesse a par ailleurs tenté de mettre au point un procédé d'allumage d'une composition aluminothermique du type indiqué en préambule, caractérisé en ce que l'on réalise au moins l'une des électrodes en un matériau présentant une première température déterminée de fusion, supérieure à une deuxième température déterminée d'allumage de la composition aluminothermique, que l'on provoque le dégagement de chaleur par effet Joule en présence de carbone et d'oxygène, dans un espace initialement suffisamment confiné pour y atteindre une troisième température supérieure à ladite première température et telle qu'il en résulte une génération de monoxyde de carbone ionisé, de façon à provoquer une fusion ionisante localisée dudit matériau, et que l'on maintient ensuite l'alimentation des deux électrodes en courant électrique, en entretenant la génération de monoxyde de carbone ionisé et un passage de courant entre elles pour ainsi poursuivre la fusion ionisante localisée du matériau, au moins pendant un temps suffisant pour produire ainsi une perle ionisée dudit matériau en fusion présentant une masse et une température suffisantes pour provoquer, par échange thermique avec ladite composition aluminothermique et excitation ionique de celle-ci, l'allumage de celle-ci.

Un tel procédé présente toutefois l'inconvénient de ne pas permettre un allumage suffisamment prévisible et fiable de la composition aluminothermique. Par ailleurs, la perle ionisée, qui amorce la composition risque de produire un court-circuit car elle constitue un contact physique entre les électrodes.

Un but de la présente invention est de remédier aux inconvénients de la technique antérieure.

On propose à cet effet, selon un premier aspect, un dispositif pour l'allumage d'une composition aluminothermique selon la revendication 1.

Des essais menés par la Demanderesse avec un tel dispositif ont montré que l'établissement du courant provoquait une réaction instantanée du dispositif.

Certains aspects préférés mais non limitatifs sont les suivantes :
- la résistance comprend du carbone,
- la formation du monoxyde de carbone s'effectue au moins partiellement à partir du carbone compris dans la résistance,
- la résistance comprend un support isolant portant des fibres de carbone,
- les fibres de carbone sont tissées,
- les fibres de carbone sont appliquées par pression contre les électrodes,
- le support porte les fibres de carbone autour de lui et est inséré à force entre les électrodes
- le support est élastiquement compressible,
- les fibres de carbone sont conformées avec une section en forme générale de U autour du support,
- l'oxygène provient de l'air ambiant,
- il comporte un passage pour l'apport d'air ambiant,
- le passage débouche au voisinage de la résistance,
- il est prévu un élément formant barrière aux solides autour de la résistance,
- ledit élément formant barrière est constitué par ledit support, ce dernier comprenant un ruban adhésif isolant appliqué contre les électrodes,
- il comprend en outre une structure externe essentiellement rigide assurant le maintien en place du ruban adhésif,
- le niveau de la composition aluminothermique se situe sous et à distance de l'extrémité inférieure des électrodes,
- le niveau de la composition aluminothermique se situe au-dessus de l'extrémité inférieure des électrodes,
- l'extrémité inférieure des électrodes est comprise dans l'élément formant barrière, de sorte que les électrodes ne sont pas en contact direct avec la composition aluminothermique,
- les électrodes sont en acier,
- la résistance est une capsule préformée,
- l'étui est réalisé en un matériau dont le point de fusion est sensiblement inférieur à la température atteinte par la réaction aluminothermique de la dose d'amorçage,
- l'étui est réalisé d'un seul tenant en aluminium ou alliage d'aluminium,
- le passage est formé dans une paroi de l'étui,
- le niveau de la composition aluminothermique dans l'étui se situe sous et à distance de l'extrémité inférieure des électrodes,
- le niveau de la composition aluminothermique dans l'étui se situe sous le passage,
- le niveau de la composition aluminothermique dans l'étui se situe au dessus de l'extrémité inférieure des électrodes,
- l'extrémité inférieure des électrodes est contenue dans l'élément formant barrière, de sorte que les électrodes ne sont pas en contact direct avec la composition aluminothermique.

Selon un deuxième aspect de l'invention, on propose un procédé d'allumage d'une composition aluminothermique principale, comprenant les étapes consistant à placer à proximité de la composition un dispositif tel que défini ci-dessus, et à alimenter la résistance de ce dispositif en courant électrique, la flamme engendrée au niveau de la résistance déclenchant une réaction aluminothermique au niveau de la dose d'amorçage, elle-même suivie d'une fusion au moins partielle de l'étui laissant du métal en fusion incandescent issu de ladite réaction se propager vers la composition aluminothermique principale.

Selon un troisième aspect de l'invention, on propose un procédé de soudage aluminothermique de profilés tels que des rails de chemin de fer, dans lequel on place une dose de composition aluminothermique dans un creuset surmontant un moule définissant avec deux extrémités de profilé en vis-à-vis une cavité de moulage, caractérisé en ce qu'on déclenche la réaction aluminothermique dans ladite dose à l'aide de l'un du procédé précédent.

Le procédé et le dispositif selon l'invention peuvent connaître de nombreuses applications, en particulier celle de la soudure aluminothermique de profilés tels que des rails de chemin de fer, application dans laquelle les conditions de transport et de manutention des différents dispositifs ne permettent pas de respecter aisément des consignes strictes de sécurité, ce qui exige en particulier que les dispositifs d'allumage excluent tout allumage intempestif des charges de soudure aluminothermique.

En relation avec une telle application, on peut prévoir que la charge de soudure aluminothermique soit logée dans un creuset. On peut alors prévoir d'enfouir plus ou moins le dispositif selon l'invention dans la charge de soudure aluminothermique.

Quelle que soit la façon dont le dispositif selon l'invention est ainsi positionné par rapport à la charge de soudure aluminothermique logée dans le creuset, il peut se présenter sous une forme indépendante de celui-ci, pour n'y être placé qu'au moment où une soudure doit être effectuée, et ceci que le creuset soit destiné à être réutilisé après la soudure ou détruit après celle-ci.

On peut cependant prévoir également que le dispositif selon l'invention, lui-même destiné à un usage unique, soit intégré au creuset ou à une partie d'un ensemble de creuset.

A cet effet, on prévoit qu'un dispositif d'allumage selon l'invention comporte, respectivement, des moyens d'intégration solidaire des électrodes à une paroi d'un ensemble de creuset de soudure aluminothermique, ou des moyens d'intégration solidaire du dispositif à une paroi d'un ensemble de creuset de soudure aluminothermique.

On entend ici par « ensemble de creuset » non seulement un creuset proprement dit, à savoir un récipient contenant la charge de soudure aluminothermique, mais également tout accessoire de ce creuset, par exemple un couvercle éventuellement rapporté sur une ouverture supérieure du creuset pour limiter ou éviter toute projection de particules incandescentes, et filtrer toute émission gazeuse pendant cette réaction.

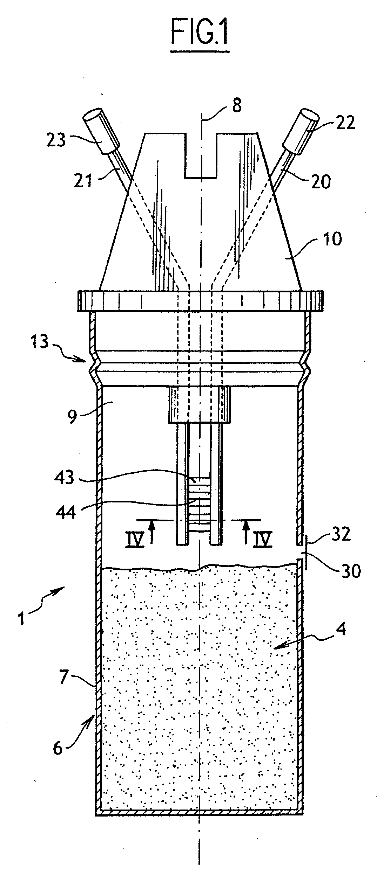

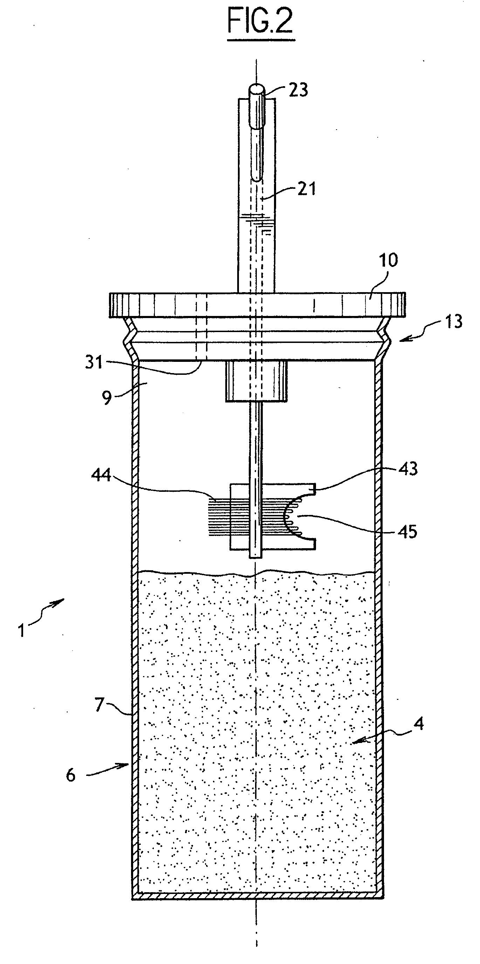

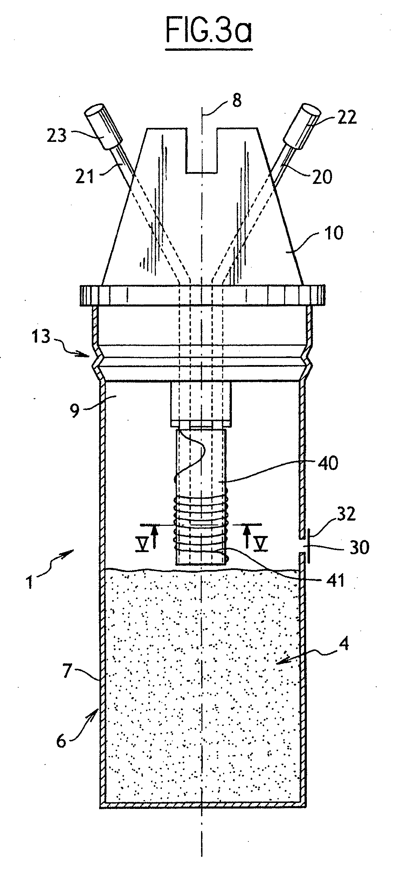

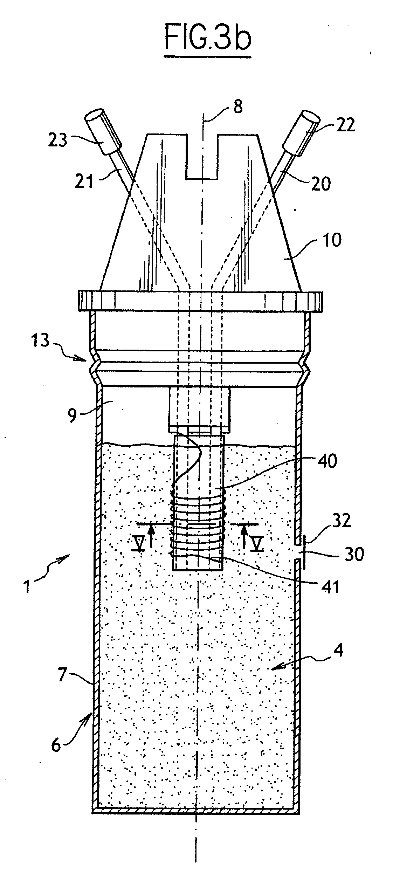

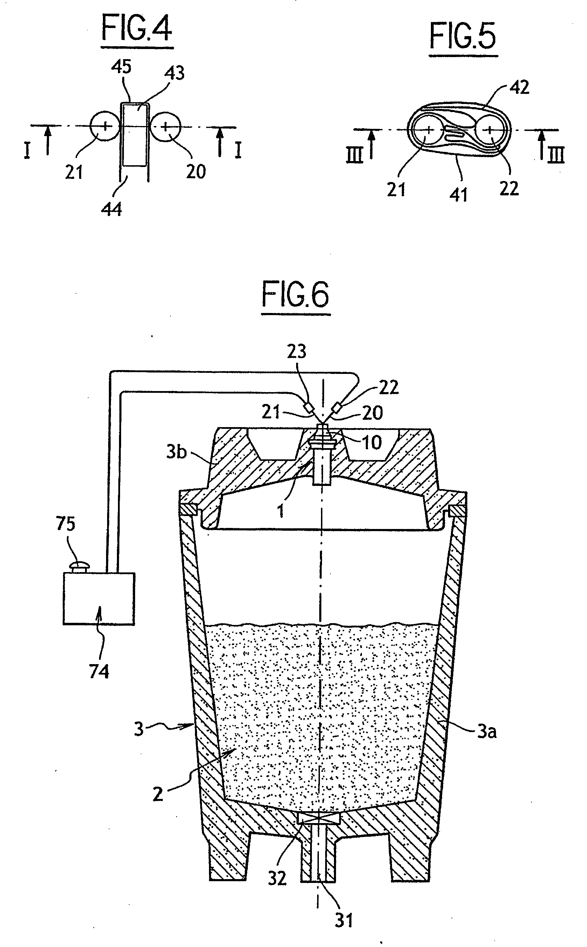

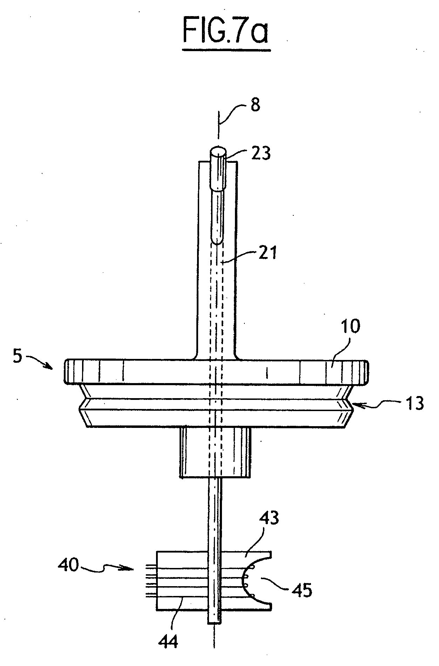

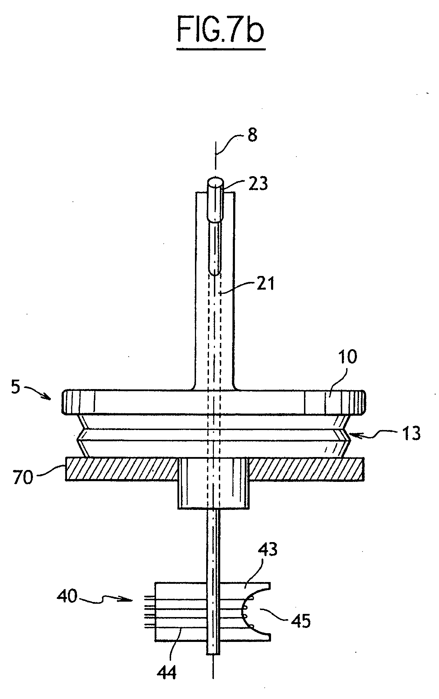

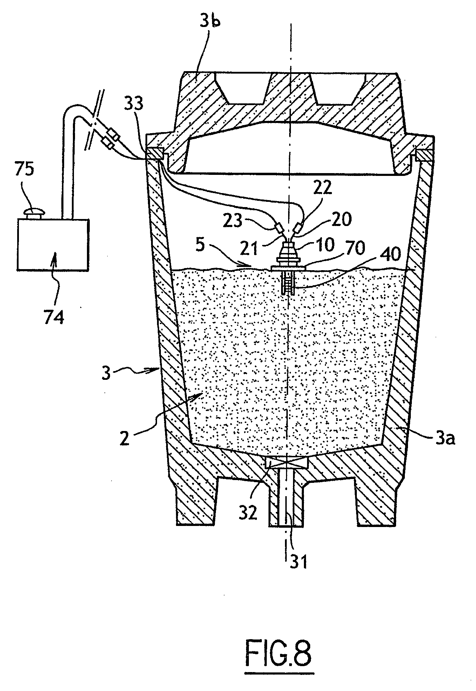

D'autres aspects, but et avantages de la présente invention apparaîtront mieux à la lecture de la description détaillée suivante de formes de réalisation préférées de celle-ci, donnée à titre d'exemple non limitatif et faite en référence aux dessins annexés, sur lesquels :
▪ La figure 1 montre une vue d'un dispositif d'allumage selon l'invention, pour partie en coupe par un plan longitudinal moyen de symétrie, incluant un axe de symétrie du dispositif, et pour partie en élévation, selon une première forme de réalisation.
▪ La figure 2 est une vue latérale du dispositif d'allumage de la figure 1.
▪ La figure 3a montre une vue d'un dispositif d'allumage selon l'invention, pour partie en coupe par un plan longitudinal moyen de symétrie, incluant un axe de symétrie du dispositif, et pour partie en élévation, selon une deuxième forme de réalisation.
▪ La figure 3b montre une vue d'un dispositif d'allumage selon l'invention, pour partie en coupe par un plan longitudinal moyen de symétrie, incluant un axe de symétrie du dispositif, et pour partie en élévation, selon une variante de la deuxième forme de réalisation.
▪ La figure 4 montre une vue partielle du dispositif d'allumage en coupe par le plan transversal IV-IV à la figure 1.
▪ La figure 5 montre une vue partielle du dispositif d'allumage de la figure 3a, en coupe par le plan transversal V-V à la figure 3a.
▪ La figure 6 illustre un exemple non limitatif de mode d'implantation d'un dispositif conforme aux figures 1 et 2 dans un ensemble de creuset du type utilisé pour la soudure aluminothermique de rails de chemin de fer, en coupe par un plan longitudinal de symétrie incluant l'axe longitudinal du dispositif selon l'invention.
▪ Les figures 7a et 7b illustrent un autre dispositif d'allumage selon l'invention, en vue similaire à la figure 1, selon la même forme de réalisation.
▪ La figure 8 montre un exemple non limitatif de mode d'implantation d'un dispositif conforme à la figure 7b dans un ensemble de creuset du type utilisé pour la soudure aluminothermique de rails de chemin de fer, en coupe par un plan longitudinal de symétrie incluant l'axe longitudinal du dispositif selon l'invention.

En référence tout d'abord aux figures 1 à 5, on a illustré deux exemples non limitatifs d'un dispositif d'allumage 1 selon l'invention comportant, pour provoquer l'allumage d'une charge 2 de soudure aluminothermique contenue dans un ensemble de creuset 3, une dose propre 4 d'une composition aluminothermique, d'un volume considérablement restreint par rapport à celui de la charge 2.

La composition aluminothermique constituant la dose 4 et la charge 2 de soudure aluminothermique se présentent de préférence à l'état granulaire, dans un souci de sécurité à l'encontre d'un démarrage spontané de la réaction aluminothermique. La nature de la composition aluminothermique constituant la dose 4 peut être la même ou différer légèrement de celle de la charge 2 de soudure aluminothermique dès lors qu'il ne peut en résulter de pollution de cette dernière.

Le dispositif 1 comporte ainsi, pour loger la dose 4 de composition aluminothermique, un étui 6, étanche, d'un matériau apte à fondre ou à être autrement détruit par échauffement à une température de l'ordre de celle qu'atteint la composition aluminothermique constituant la dose 4 sans risquer de provoquer de pollution de la charge aluminothermique 2. L'étui 6 peut ainsi avantageusement être réalisé en une seule pièce en aluminium ou alliage d'aluminium.

L'étui 6 est ouvert au niveau de l'extrémité supérieure de la paroi tubulaire 7 qui le constitue, mais son ouverture 11 est fermée de façon étanche par un bouchon (ou embase) 10 réalisé en un matériau qui, à la fois, constitue un isolant électrique et résiste suffisamment longtemps à l'élévation de température à laquelle il est soumis pendant le fonctionnement du dispositif 1. L'embase 10 peut par exemple être réalisée en un matériau synthétique thermodurcissable, ou encore thermoplastique, tel qu'un polyamide tel que du PA6 chargé en fibres de verre.

L'embase 10 est solidarisée avec l'étui 6 par engagement coaxial dans l'ouverture 11, à l'extrémité de la paroi 7, et sertissage 13 dans la paroi 7.

Comme l'étui 6, l'embase 10 présente dans l'exemple illustré une forme générale de révolution autour de l'axe 8.

A l'intérieur de l'embase 10 sont logées partiellement et retenues solidairement, par exemple par surmoulage, deux électrodes 20, 21 pour l'essentiel longitudinales. L'embase 10 maintient une isolation électrique entre elles.

Les deux électrodes 20 et 21 sont réalisées en un matériau présentant une température fusion supérieure à la température d'amorçage de la composition aluminothermique 4 et inférieure à la température de la flamme d'allumage.

Ainsi, pour une température d'amorçage de la composition 4 de l'ordre de 1340 °C, on réalise avantageusement les électrodes 20 et 21 en un matériau présentant une température de fusion au moins égale à 1600 °C, par exemple en acier doux.

Chaque électrode 20, 21 ainsi réalisée en acier peut optionnellement être revêtue d'une gaine électriquement conductrice et résistant à l'oxydation qui la protège de la corrosion jusqu'à l'utilisation du dispositif.

Les électrodes 20 et 21 présentent par exemple chacune la forme d'une tige pleine de section circulaire constante, et comportent chacune deux tronçons rectilignes qui se succèdent longitudinalement. Le premier tronçon est parallèle à l'axe 8 et est partiellement en saillie de l'embase 10. Le deuxième tronçon s'éloigne progressivement de l'axe 8 par rapport à la face supérieure de l'embase 10, jusqu'à une extrémité libre respective 22, 23.

Ces extrémités libres 22, 23, selon un mode de réalisation, sont aptes à être connectées par emboîtement à un conducteur électrique d'alimentation respectif, et à en être séparées par exemple par simple traction sur le conducteur correspondant.

Ces conducteurs sont eux-mêmes raccordables à un dispositif 74 d'alimentation commandée en courant électrique, fournissant une haute intensité, et à un commutateur 75 permettant d'alimenter les conducteurs en courant électrique et de maintenir cette alimentation aussi longtemps que voulu.

Le dispositif d'alimentation 74 comprend de préférence une batterie de 12 volts à décharge rapide, pour pouvoir fournir très rapidement le courant demandé.

Un passage 30 débouchant sur l'extérieur est prévu dans le dispositif 1 afin de permettre à de l'air d'entrer dans l'espace fermé défini par l'embase 10 et l'étui 6. Ce passage 30 autorise une alimentation en oxygène nécessaire au fonctionnement du dispositif, comme on va le voir en détail dans la suite.

Le passage 30 peut être par exemple formé dans l'embase 10, sous forme d'un canal 31 communiquant avec l'espace intérieur 9 de l'étui 6, comme illustré sur la figure 2.

Il peut en variante également être percé directement dans l'étui 6, au niveau de l'espace 9, comme illustré sur la figure 3, ou encore au niveau de la charge 4, comme illustré sur la figure 1. Une protection temporaire 32 couvre alors le passage 30 lors du stockage du dispositif 1. Lors de l'utilisation du dispositif, il suffit alors de retirer cette protection avant d'allumer la charge. A titre d'exemple non limitatif, il peut s'agir d'une protection adhésive telle qu'une étiquette, qui dans le même temps peut porter une date de péremption.

Le dispositif comprend en outre une résistance électrique 40 montée entre les deux électrodes 20, 21.

Cette résistance, qui peut être réalisée sous différentes formes, contient du carbone afin de permettre la formation de monoxyde de carbone, nécessaire à l'allumage d'une flamme comme on va le voir.

En outre, la résistance 40 est montée sur les électrodes 20, 21 de façon qu'un contact physique ferme soit assuré entre elles afin d'assurer un bon établissement du courant dans la résistance, en résistant à l'élévation de température pendant un temps suffisamment long pour aboutir à la formation d'une flamme, comme on le verra également en détail plus loin.

On notera que la résistance 40 est directement exposée à l'espace intérieur défini par l'étui 6 et l'embase 10.

Dans un mode préférentiel (illustré sur les figures 1, 2, 3a), le niveau de la composition aluminothermique 4 dans l'étui 6 se situe sous et à distance de l'extrémité inférieure des électrodes 20, 21, plus particulièrement à une distance de l'ordre de quelques millimètres. Ainsi, aucun contact au démarrage de la réaction ne pouvant avoir lieu entre les électrodes 21, 22 et la composition 4, tout risque de fusion des électrodes 20, 21 ou de court-circuit peut être évité.

Par ailleurs, afin de prévenir tout risque de fuite de la composition par le passage 30, s'il est pratiqué dans l'étui 6, lorsque l'on retire la protection 32, on peut avantageusement positionner ledit passage 30 légèrement au-dessus de la surface supérieure de la composition aluminothermique 4, au niveau de l'extrémité inférieure des électrodes 20, 21.

Selon un autre mode de réalisation (illustré sur la figure 3b), le niveau de la composition aluminothermique dans l'étui 6 se situe au dessus de l'extrémité inférieure des électrodes 20, 21. Afin qu'elles ne soient pas noyées dans la composition aluminothermique 4, ce qui risquerait de provoquer, d'une part, un court-circuit entre la composition 4 et les électrodes 20, 21, et d'autre part la fusion partielle des électrodes 20, 21 en démarrage de réaction, un élément formant barrière est placé au niveau desdites extrémités inférieures des électrodes. Cet élément peut être constitué par exemple par la résistance, ou tout autre élément solide placé autours de la résistance 40 qui permette d'éviter tout contact entre les électrodes 20, 21 et la composition 4.

Selon une première forme de réalisation, illustrée sur les figures 1, 2 et 4, la résistance électrique 40 comprend un corps isolant 43 servant de support à des fibres de carbone 44. Les fibres de carbone 44 sont formées en une mèche formant un U entourant partiellement le corps 43 de manière à être plaquées contre ses surfaces latérales, comme on va le voir en détail plus loin.

A titre d'exemple non limitatif, le corps 43 est en matériau élastiquement compressible et de préférence réalisé par découpage dans une pièce moulée ou extrudée d'épaisseur appropriée, telle qu'une feuille de silicone pleine.

Concernant les fibres de carbone 44, on peut utiliser un ruban de fibres de carbone unidirectionnelles d'un diamètre de l'ordre de quelques micromètres (par exemple 4 µm), le nombre de fibres dans le paquet de fibres étant typiquement de quelques centaines à quelques milliers.

Selon une forme de réalisation préférée, le corps 43 est un profilé rectangulaire, dont la largeur est légèrement supérieure à la largeur de l'espace entre les électrodes 21, 22. Il peut comprendre une encoche 45 de section par exemple semi-circulaire sur une surface frontale (voir figure 2), encoche dans laquelle sont retenues les fibres 44 à la transition entre les deux branches du U.

Le montage de la résistance sur les électrodes s'effectue en engageant à force entre les électrodes 21, 22, à la main ou à l'aide d'un équipement robotisé, le corps 43 muni des fibres de carbone 44, positionnées en U comme décrit, à partir de la région de transition entre les branches du U (à savoir de la gauche vers la droite sur la figure 2).

La compressibilité élastique du corps 43 est telle que lors de cette insertion, les fibres 44 sont retenues par pression de part et d'autre du corps, entre ses deux surfaces latérales et les deux électrodes 21, 22 respectivement, en étant orientées sensiblement perpendiculairement aux électrodes.

L'insertion du corps intermédiaire 43 entre les deux électrodes 21, 22 peut s'effectuer :
▪ soit en partant de l'extrémité libre des électrodes 21, 22, en glissant le long de celles-ci jusqu'à une position souhaitée, dans laquelle le paquet de fibres 44 est en contact avec les électrodes sur toute sa hauteur,
▪ soit par le côté des électrodes, perpendiculairement au plan formé par elles, à partir de la face frontale du corps dans laquelle est formée l'encoche 45 de façon à, assurer une bonne mise en place des fibres 44.

Dans les deux cas, l'encoche 45 permet de faciliter la retenue en place des fibres 44 lors de la mise en place du corps 43 muni de celles-ci entre les électrodes.

La retenue en place du corps 43 muni des fibres 44 entre les électrodes, avec la fermeté requise, est assurée par l'élasticité du corps, et le cas échéant par celle des électrodes 21, 22 qui peuvent lors de la mise en place s'écarter légèrement l'une de l'autre, par une déformation élastique induisant une force de rappel.

Alternativement, pour renforcer le contact physique entre les fibres 44 et les électrodes 21, 22, il est possible d'exercer sur les électrodes 21, 22 un effort tendant à les resserrer, à l'aide d'une pince. On peut également envisager d'assurer ou de renforcer le contact grâce à une bande adhésive, agencée de manière à autoriser la pénétration de l'air jusqu'à la résistance.

En vue de la fabrication en grande série du dispositif, on peut utiliser, pour fabriquer les résistances, un profilé de grande longueur par exemple extrudés dans le matériau isolant du support 43, et sur la longueur duquel des fibres de carbones 44 sont repliées en U. Lors du montage, le profilé est alors sectionné à la bonne largeur, parallèlement aux fibres, pour obtenir une résistance 40 du type décrit ci-dessus, mise en place comme également décrit.

On notera que selon une variante de réalisation, les fibres de carbone 44 peuvent être enroulées tout autour du corps 43.

Selon une deuxième forme de réalisation, illustrée sur les figures 3 et 5, la résistance 40 comprend des fibres de carbone 44 collées contre les électrodes au moyen d'un support isolant constitué d'un ruban adhésif 42, par exemple en PTFE (Teflon®), enroulé autour des électrodes.

Afin d'assurer une application ferme des fibres de carbone 44 contre les électrodes 20 et 21, on peut par exemple ensuite serrer le ruban adhésif 42 grâce à un fil de fer 41, comme illustré sur la figure 3, ou à toute autre structure externe essentiellement rigide. Dans tous les cas, cette structure rigide est choisie en un matériau qui ne pollue pas la composition aluminothermique 4 ni la charge aluminothermique 2 s'il vient à se décomposer.

Le ruban adhésif 42 est positionné de telle sorte que le contact entre les fibres de carbone 44 et les électrodes 21 et 22 soit le plus important possible. A cet effet, on peut par exemple le repousser de manière à ce qu'il forme un accordéon entre les deux électrodes 20 et 21 et comble au moins partiellement l'espace entre celles-ci, comme illustré sur la figure 5. Un tel agencement permet en outre que l'air environnant atteigne la résistance 40.

Selon une troisième forme de réalisation (non illustrée), la résistance 40 est une capsule unitaire préformée en carbone que l'on vient emmancher sur les électrodes 20 et 21 par déformation élastique de la capsule et/ou des électrodes.

La déformation de la capsule 40 et/ou des électrodes 20 et 21 est telle qu'elle suffit à assurer l'application par pression du carbone contre les électrodes, nécessaire au bon fonctionnement du dispositif 1. Dans cette réalisation, on assure que l'air puisse circuler jusqu'à la résistance et accessoirement, on empêche toute infiltration de particules de la composition aluminothermique 4 au sein de la résistance.

Par ailleurs, dans le cas où le niveau de la composition aluminothermique serait situé au-dessus de l'extrémité inférieure des électrodes 21, 22, l'agencement et la forme de la résistance dans les deux formes de réalisation précédemment décrites, lui permettent d'être utilisée en tant qu'élément formant barrière, afin de protéger les électrodes 21, 22 des risques de fusion et de court-circuit avec la composition.

Selon une quatrième forme de réalisation (non illustrée), la résistance électrique 40 est réalisée à l'aide un tissu de fibres de carbone. Dans ce cas, afin d'assurer un contact physique ferme entre les électrodes 20 et 21 et la résistance 40, on peut prévoir de conformer, le tissu de carbone autour d'un corps du type de celui de la première forme de réalisation, pour qu'il adopte une section en U, ou de l'appliquer par pression contre les électrodes 20 et 21 à l'aide d'une structure externe essentiellement rigide, comme dans la deuxième forme de réalisation.

Le dispositif de la présente invention opère de la façon suivante. Lorsqu'il est connecté à la source d'alimentation, un courant circule dans la résistance 40, et en particulier dans les fibres de carbone 44. L'effet Joule qui en résulte provoque une élévation rapide de la température des fibres, jusqu'à atteindre une température telle que l'oxygène environnant se combine avec le carbone de la résistance pour former du monoxyde de carbone.

Celui-ci se transforme ensuite, par une réaction exothermique, en dioxyde de carbone. Le caractère exothermique de cette réaction conduit de façon rapide à la formation d'une flamme au sein de la charge d'allumage 4, flamme dont la température peut être estimée à plus de 2000°C, qui déclenche la réaction aluminothermique de celle-ci.

L'allumage de la charge 4 permet d'atteindre rapidement la température de fusion du matériau de l'étui 6. Le fer en fusion, incandescent, issu de la réaction aluminothermique de la charge 4, peut alors s'échapper.

La figure 6 illustre un ensemble de creuset 3 pourvu d'un dispositif d'allumage selon la présente invention et d'une source d'alimentation 74 pourvue d'un interrupteur de commande.

De façon connue en soi, l'ensemble de creuset comprend une partie creuset 3a logeant une charge aluminothermique principale 2 et un couvercle 3b fermant le creuset en partie supérieure, ces deux éléments étant de préférence réalisés en sable aggloméré. Ces éléments parfaitement connus de l'homme du métier ne seront pas décrits plus avant. Cet ensemble de creuset est typiquement placé au dessous d'un moule placé autour de deux extrémités de rails en vis-à-vis, en vue de leur soudage à l'aide de l'acier en fusion issu de la réaction aluminothermique dans la charge principale 2, qui s'écoulera à travers un orifice de sortie 31 après qu'un bouchon 32 typiquement en carton se soit consumé.

Le dispositif 1 est encastré dans une ouverture traversante pratiquée au centre du couvercle 3b, de manière que l'étui 6 débouche dans l'espace intérieur du creuset, à l'aplomb de la charge 3, et que les extrémités 22 et 23 des électrodes 20 et 21 soient accessibles au-dessus du couvercle.

Des conducteurs souples (non référencés) peuvent ainsi relier la source d'alimentation 74 au dispositif d'allumage.

On comprend que lorsque le dispositif d'allumage est déclenché, du fer en fusion incandescent coule vers le bas et atteint la charge aluminothermique principale 2, ce qui provoque l'allumage celle-ci dans la zone atteinte puis rapidement sa propagation à l'ensemble de la charge 2.

Dès que l'on a constaté l'allumage de la charge aluminothermique 2, on peut interrompre l'alimentation du dispositif 1 en courant électrique.

Les conducteurs souples seront détachés des extrémités 22 et 23 des électrodes avant de mettre le creuset et son couvercle au rebut (cas d'un creuset à usage unique).

Selon une variante de réalisation, un dispositif d'allumage 1 peut être mis en contact direct avec la charge 2, auquel cas il est avantageusement simplifié en une tête d'allumage ne comportant ni l'étui 6, ni la charge aluminothermique d'amorçage 4 tels que décrits plus haut. Une telle tête d'allumage est illustrée sur la figure 7a.

Selon une variante de ce dispositif simplifié, telle qu'illustrée sur la figure 7b, on prévoit sur la tête un moyen permettant de vérifier sa profondeur d'enfouissement à partir de la surface libre de la charge 2, voire de limiter cette profondeur d'enfouissement.

Un tel moyen peut comprendre une rondelle plate 70 fixée à en partie inférieure de l'embase 10.

Sur les figures 7a et 7b, des éléments identiques ou similaires à ceux des figures 1 à 5 sont désignés par les mêmes signes de référence.

On comprend que dans le cas d'un contact de la tête 5 avec la charge principale 2, c'est la flamme engendrée au niveau de la résistance 40 comme expliqué plus haut, qui provoque directement le déclenchement de la réaction aluminothermique.

Le dispositif simplifié 1 peut être soit simplement déposé à la surface de la charge 2, en position couchée, soit préférentiellement, et comme le montre la figure 8, implanté directement dans la charge aluminothermique 2. L'extrémité des électrodes 21, 22 est alors de préférence protégée par un élément formant barrière du type précédemment décrit (non représenté), afin d'éviter tout risque de court-circuit ou de fusion des électrodes 21, 22.

La tête 5 prend appui à plat, aidée en cela par la rondelle 70, sur la face supérieure de charge 2, de telle sorte que les électrodes 20 et 21 et la résistance 40 pénètrent dans la charge 2 sur une certaine profondeur. Dans le même temps, cette profondeur est réduite, ce qui permet à l'air ambiant dans le creuset de circuler jusqu'à la résistance 40 lors de l'allumage, de façon à réaliser l'alimentation en oxygène requise.

Dans ce cas, les conducteurs amenant le courant au à la tête 5 passent de préférence dans l'interstice entre la partie creuset 3a et la partie couvercle 3b, le joint de feutre généralement prévu dans cet interstice évitant de détériorer ces conducteurs.

En variante, on peut prévoir d'insérer une tête 5 telle que décrite ci-dessus, voire un dispositif d'allumage 1 complet, dans une paroi latérale de la partie creuset 3a, soit par incorporation directe lors de la fabrication du creuset, soit par engagement solidaire, préalablement à l'exécution d'une soudure et avant de placer dans le creuset la charge aluminothermique, dans un logement aménagé à cet effet dans ladite paroi lors de la fabrication du creuset.

Ici encore, la réaction aluminothermique commence dès que la flamme est engendrée au niveau de la résistance 40.

L'homme du métier comprendra que les différents modes de réalisation d'un dispositif selon l'invention qui ont été décrits ci-dessus ne constituent que des exemples non limitatifs, de même que les différents modes de coopération entre un tel dispositif selon l'invention et une charge principale 2 à allumer. La présente invention est donc susceptible de nombreuses variantes par rapport à ce qui vient d'être décrit, sans que ces variantes ne sortent du cadre de la présente invention.

## Revendications

1. Dispositif (1) pour l'allumage d'une composition aluminothermique (4), comprenant :
- une résistance électrique (40) reliant deux électrodes (20, 21) et destinée à être alimentée avec une source de courant électrique pour provoquer un dégagement de chaleur par effet Joule,
- un étui étanche (6) contenant une dose de composition aluminothermique d'amorçage (4) et monté sur une embase (10) dans laquelle sont montées les électrodes (20, 21), la résistance électrique étant directement exposée à l'espace intérieur défini par l'étui (6) et l'embase (10), et **caractérisé en ce que**
ladite résistance électrique est exposée à un milieu comprenant de l'oxygène et du carbone de telle sorte que l'élévation de température du milieu par la résistance provoque la formation de monoxyde de carbone, puis une réaction exothermique de ce dernier avec l'oxygène, provoquant l'apparition d'une flamme apte à provoquer l'allumage de la composition aluminothermique (4).

2. Dispositif (1) selon la revendication 1, **caractérisé en ce que** la résistance (40) comprend du carbone.

3. Dispositif (1) selon la revendication 2, **caractérisé en ce que** la formation du monoxyde de carbone s'effectue au moins partiellement à partir du carbone compris dans la résistance (40).

4. Dispositif (1) selon la revendication 3, **caractérisé en ce que** la résistance (40) comprend un support isolant (43) portant des fibres de carbone.

5. Dispositif (1) selon l'une quelconque des revendications 2 à 4, **caractérisé en ce que** le support (43) porte les fibres de carbone autour de lui et est inséré à force entre les électrodes (21, 22).

6. Dispositif (1) selon la revendication 5, **caractérisé en ce que** le support (43) est élastiquement compressible.

7. Dispositif (1) selon l'une des revendications 1 à 6, **caractérisé en ce que** l'oxygène provient de l'air ambiant.

8. Dispositif selon la revendication 7, **caractérisé en ce qu'**il comporte un passage (30) pour l'apport d'air ambiant.

9. Dispositif (1) selon l'une des revendications 1 à 8, **caractérisé en ce que** les électrodes sont en acier.

10. Dispositif (1) selon la revendication 9, **caractérisé en ce que** l'étui (6) est réalisé en un matériau dont le point de fusion est sensiblement inférieur à la température atteinte par la réaction aluminothermique de la dose d'amorçage (4).

11. Dispositif selon l'une des revendications 1 à 10, **caractérisé en ce que** le niveau de la composition aluminothermique (4) dans l'étui (6) se situe sous l'extrémité inférieure des électrodes (20, 21).

12. Dispositif selon l'une des revendications 1 à 10, **caractérisé en ce que** le niveau de la composition aluminothermique (4) dans l'étui (6) se situe au-dessus de l'extrémité inférieure des électrodes (20, 21), l'extrémité inférieure desdites électrodes étant comprise dans un élément formant barrière aux solides entourant la résistance électrique (40), de sorte que les électrodes (20, 21) ne sont pas en contact direct avec la composition aluminothermique (4).

13. Procédé d'allumage d'une composition aluminothermique principale (2), comprenant les étapes consistant à placer à proximité de la composition un dispositif (1) selon l'une des revendications 1 à 12, et à alimenter la résistance de ce dispositif en courant électrique, la flamme engendrée au niveau de la résistance déclenchant une réaction aluminothermique au niveau de la dose d'amorçage (4), elle-même suivie d'une fusion au moins partielle de l'étui (6) laissant du métal en fusion incandescent issu de ladite réaction se propager vers la composition aluminothermique principale (2).

14. Procédé de soudage aluminothermique de profilés tels que des rails de chemin de fer, dans lequel on place une dose de composition aluminothermique dans un creuset surmontant un moule définissant avec deux extrémités de profilé en vis-à-vis une cavité de moulage, **caractérisé en ce qu'**on déclenche la réaction aluminothermique dans ladite dose à l'aide d'un procédé selon la revendication 13.

15. Ensemble de creuset (3) pour réaction aluminothermique, apte à s'ajuster au-dessus d'un moule pour le soudage de profilés tels que des rails de chemin de fer, **caractérisé en ce qu'**il comprend un dispositif d'allumage (1) selon l'une des revendications 1 à 12.

## Patentansprüche

1. Vorrichtung (1) zum Zünden einer alumino-thermischen Zusammensetzung (4), umfassend:
- einen elektrischen Widerstand (40), der zwei Elektroden (20, 21) verbindet und bestimmt ist, mit einer elektrischen Stromquelle versorgt zu sein, um eine Wärmeabgabe durch Joule-Effekt hervorzurufen,
- ein dichtes Etui (6), das eine Starterdosis der alumino-thermischen Zusammensetzung (4) enthält und auf einer Grundplatte (10) montiert ist, in welche die Elektroden (20, 21) montiert sind, wobei der elektrische Widerstand dem Innenraum, der von dem Etui (6) und der Grundplatte (10) bestimmt ist, direkt ausgesetzt ist, und **dadurch gekennzeichnet, dass**
der elektrische Widerstand einem Medium ausgesetzt ist, das Sauerstoff und Kohlenstoff derart umfasst, dass die Erhöhung der Temperatur des Mediums durch den Widerstand zur Bildung von Kohlenmonoxid führt, dann einer exothermen Reaktion desselben mit dem Sauerstoff, was die Ausbildung einer Flamme verursacht, die imstande ist, die alumino-thermische Zusammensetzung (4) zu zünden.

2. Vorrichtung (1) nach Anspruch 1, **dadurch gekennzeichnet, dass** der Widerstand (40) Kohlenstoff umfasst.

3. Vorrichtung (1) nach Anspruch 2, **dadurch gekennzeichnet, dass** die Bildung des Kohlenmonoxids mindestens teilweise aus Kohlenstoff erfolgt, der in dem Widerstand (40) ist.

4. Vorrichtung (1) nach Anspruch 3, **dadurch gekennzeichnet, dass** der Widerstand (40) einen isolierenden Träger (43) umfasst, der Karbonfasern trägt.

5. Vorrichtung (1) nach einem der Ansprüche 2 bis 4, **dadurch gekennzeichnet, dass** der Träger (43) die Karbonfasern um sich herum trägt und kraftschlüssig zwischen den Elektroden (21, 22) eingesetzt ist.

6. Vorrichtung (1) nach Anspruch 5, **dadurch gekennzeichnet, dass** der Träger (43) elastisch komprimierbar ist.

7. Vorrichtung (1) nach einem der Ansprüche 1 bis 6, **dadurch gekennzeichnet, dass** der Sauerstoff aus der Umgebungsluft kommt.

8. Vorrichtung nach Anspruch 7, **dadurch gekennzeichnet, dass** sie einen Durchgang (30) für die Zufuhr von Umgebungsluft aufweist.

9. Vorrichtung (1) nach einem der Ansprüche 1 bis 8, **dadurch gekennzeichnet, dass** die Elektroden aus Stahl sind.

10. Vorrichtung (1) nach Anspruch 9, **dadurch gekennzeichnet, dass** das Etui (6) aus einem Material hergestellt ist, dessen Schmelzpunkt im Wesentlichen unter der Temperatur liegt, die durch die alumino-thermische Reaktion der Starterdosis (4) erreicht wird.

11. Vorrichtung nach einem der Ansprüche 1 bis 10, **dadurch gekennzeichnet, dass** das Niveau der alumino-thermischen Zusammensetzung (4) im Etui (6) unter dem unteren Ende der Elektroden (20, 21) liegt.

12. Vorrichtung nach einem der Ansprüche 1 bis 10, **dadurch gekennzeichnet, dass** das Niveau der alumino-thermischen Zusammensetzung (4) im Etui (6) über dem unteren Ende der Elektroden (20, 21) liegt, wobei das untere Ende der Elektroden in einem Element eingeschlossen ist, das für Feststoffe, welche den elektrischen Widerstand (40) umgeben, eine Barriere bildet, so dass die Elektroden (20, 21) mit der alumino-thermischen Zusammensetzung (4) nicht in direktem Kontakt sind.

13. Zündverfahren einer alumino-thermischen Haupt-Zusammensetzung (2), das die Schritte umfasst, die darin bestehen, in der Nähe der Zusammensetzung eine Vorrichtung (1) nach einem der Ansprüche 1 bis 12 zu platzieren und den Widerstand dieser Vorrichtung mit elektrischem Strom zu versorgen, wobei die im Bereich des Widerstands erzeugte Flamme eine alumino-thermische Reaktion im Bereich der Starterdosis (4) auslöst, der selbst ein mindestens teilweises Schmelzen des Etuis (6) folgt, wobei sich schmelzendes glühendes Metall aus der Reaktion in Richtung der alumino-thermischen Haupt-Zusammensetzung (2) verbreitet.

14. Alumino-thermisches Schweißverfahren von Profilen wie Eisenbahngleise, bei dem eine Dosis alumino-thermische Zusammensetzung in einer Pfanne platziert wird, die über eine Form hinausragt, die mit zwei gegenüberliegenden Profilenden einen Formungshohlraum bildet, **dadurch gekennzeichnet, dass** die alumino-thermische Reaktion in der Dosis mit Hilfe eines Verfahrens nach Anspruch 13 ausgelöst wird.

15. Pfanneneinheit (3) für alumino-thermische Reaktion, die imstande ist, für das Schweißen von Profilen wie Eisenbahngleise über einer Form zu fluchten, **dadurch gekennzeichnet, dass** sie eine Zündvorrichtung (1) nach einem der Ansprüche 1 bis 12 umfasst.

## Claims

1. A device (1) for igniting an aluminothermal composition (4), comprising:
- an electric resistor (40) connecting two electrodes (20, 21) and intended to be powered with an electric current source in order to cause release of heat via the Joule effect,
- a sealed casing (6) containing a priming aluminothermal composition dose (4) and mounted on a base (10) in which the electrodes (20, 21) are mounted, the electric resistor being directly exposed to the inner space defined by the casing (6) and the base (10), and **characterized in that**
said electric resistor is exposed to a medium comprising oxygen and carbon so that the rise in temperature of the medium by the resistor causes formation of carbon monoxide and then an exothermic reaction of the latter with oxygen, causing the occurrence of a flame capable of igniting the aluminothermal composition (4).

2. The device (1) according to claim 1, **characterized in that** the resistor (40) comprises carbon.

3. The device (1) according to claim 2, **characterized in that** the formation of carbon monoxide is at least partly effected from the carbon comprised in the resistor (40).

4. The device (1) according to claim 3, **characterized in that** the resistor (40) comprises an insulating support (43) bearing carbon fibers.

5. The device (1) according to any of claims 2 to 4, **characterized in that** the support (43) bears the carbon fibers around it and is forcibly inserted between the electrodes (21, 22).

6. The device (1) according to claim 5, **characterized in that** the support (43) is elastically compressible.

7. The device (1) according to any of claims 1 to 6, **characterized in that** the oxygen is from the ambient air.

8. The device according to claim 7, **characterized in that** it includes a passage (30) for providing ambient air.

9. The device (1) according to any of claims 1 to 8, **characterized in that** the electrodes are in steel.

10. The device (1) according to claim 9, **characterized in that** the casing (6) is made in a material for which the melting point is substantially below the temperature reached by the aluminothermal reaction of the priming dose (4).

11. The device (1) according to any of claims 1 to 10, **characterized in that** the level of the aluminothermal composition (4) in the casing (6) is located below the lower end of the electrodes (20, 21).

12. The device (1) according to any of claims 1 to 10, **characterized in that** the level of the aluminothermal composition (4) in the casing (6) is located above the lower end of the electrodes (20, 21), the lower end of said electrodes being comprised in an element forming a barrier to solids around the electric resistor (40), so that the electrodes (20, 21) are not in direct contact with the aluminothermal composition (4).

13. A method for igniting a main aluminothermal composition (2), comprising the steps consisting of placing in proximity to the composition, a device (1) according to any of claims 1 to 12, and of supplying electric current to the resistor of this device, the flame generated at the resistor triggering off an aluminothermal reaction at the priming dose (4), itself followed by at least partial melting of the casing (6) letting incandescent molten metal from said reaction propagate towards the main aluminothermal composition (2).

14. A method for aluminothermal welding of profiles such as railway rails, in which an aluminothermal composition dose is placed in a crucible surmounting a mold defining with two profile ends facing each other, a molding cavity, **characterized in that** the aluminothermal reaction is triggered off in said dose by means of a method according to claim 13.

15. A crucible assembly (3) for an aluminothermal reaction, capable of being adjusted above a mold for welding profiles such as railway rails, **characterized in that** it comprises an ignition device (1) according to any of claims 1 to 12.
